(19) **Europäisches Patentamt / European Patent Office / Office européen des brevets**

(11) **EP 4 757 199 A1**

(12) **EUROPEAN PATENT APPLICATION**
published in accordance with Art. 153(4) EPC

(43) Date of publication:
10.06.2026 Bulletin 2026/24

(21) Application number: 24849475.9

(22) Date of filing: 25.07.2024

(51) International Patent Classification (IPC):
$H04B\ 7/06^{(2006.01)}$    $H04B\ 7/08^{(2006.01)}$
$H04W\ 24/08^{(2009.01)}$    $H04W\ 24/10^{(2009.01)}$
$H04W\ 72/23^{(2023.01)}$    $H04L\ 1/1812^{(2023.01)}$
$H04L\ 5/00^{(2006.01)}$

(52) Cooperative Patent Classification (CPC):
H04B 7/06; H04B 7/08; H04L 1/1812; H04L 5/00;
H04W 24/08; H04W 24/10; H04W 72/23

(86) International application number:
PCT/KR2024/010785

(87) International publication number:
WO 2025/028906 (06.02.2025 Gazette 2025/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.07.2023 KR 20230099097

(71) Applicant: LG Electronics Inc.
Yeongdeungpo-gu
Seoul 07336 (KR)

(72) Inventor: KANG, Jiwon
Seoul 06772 (KR)

(74) Representative: Maikowski & Ninnemann
Patentanwälte Partnerschaft mbB
Postfach 15 09 20
10671 Berlin (DE)

(54) **METHOD AND DEVICE FOR PERFORMING BEAM MANAGEMENT IN WIRELESS COMMUNICATION SYSTEM**

(57) A method and a device for performing beam management in a wireless communication system are disclosed. The method performed by a terminal, according to one embodiment of the present disclosure, may comprise the steps of: receiving at least one reference signal (RS) from a base station; and, on the basis of the at least one RS, transmitting, to the base station, information for reporting or requesting one or more RSs required by the terminal. Here, with respect to the one or more RSs, the information can include at least one from among first information indicating an RS or an RS set, second information related to the number of repetitions, third information related to the number of RSs, or fourth information related to a beam angle.

FIG.9

START

Receive at least one RS, from a base station   S910

Transmit information for reporting or requesting one or more RSs required by a user equipment, to the base station   S920

END

## Description

[TECHNICAL FIELD]

The present disclosure relates to a wireless communication system, and more particularly, to a method and device for performing beam management in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical problem of the present disclosure is to provide a method and an apparatus for performing beam management in a wireless communication system.

In addition, an additional technical problem of the present disclosure is to provide a method and an apparatus for supporting artificial intelligence (AI)/machine learning (ML)-based beam management.

The technical objects to be achieved by the present disclosure are not limited to the above-described technical objects, and other technical objects which are not described herein will be clearly understood by those skilled in the pertinent art from the following description.

[Technical Solution]

A method performed by a user equipment (UE) in a wireless communication system according to an aspect of the present disclosure may comprise: receiving, from a base station, at least one reference signal (RS); and based on the at least one RS, transmitting, to the base station, information for reporting or requesting one or more RSs required by the UE. Herein, for the one or more RSs, the information may include at least one of first information indicating an RS or an RS set, second information related to a repetition number, third information related to a number of RSs, or fourth information related to a beam angle.

A method performed by a base station in a wireless communication system according to an additional aspect of the present disclosure may comprise: transmitting, to a user equipment (UE), at least one reference signal (RS); and receiving, from the UE, based on the at least one RS, information for reporting or requesting one or more RSs required by the UE. Herein, for the one or more RSs, the information may include at least one of first information indicating an RS or an RS set, second information related to a repetition number, third information related to a number of RSs, or fourth information related to a beam angle.

[Technical Effects]

According to various embodiments of the present disclosure, a method and an apparatus for performing beam management in a wireless communication system may be provided.

In addition, according to various embodiments of the present disclosure, a method and an apparatus for supporting AI/ML-based beam management may be provided.

In addition, according to various embodiments of the present disclosure, there may be a technical effect that signaling overhead and/or latency for reconfiguring/indicating a reference signal (RS) according to a report/request of a user equipment (UE) may be omitted or reduced.

The technical objects to be achieved by the present disclosure are not limited to the above-described technical objects, and other technical objects which are not described herein will be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a general functional architecture related to Functionality-based LCM and Model-based LCM.
FIG. 8 illustrates signaling operations for procedures related to AI/ML.
FIG. 9 is a diagram for explaining an operation of a user equipment (UE) in a wireless communication system to which the present disclosure may be applied.
FIG. 10 is a diagram for explaining an operation of a base station in a wireless communication system to which the present disclosure may be applied.
FIG. 11 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.
In some cases, known structures and devices may be omitted or may be shown in a form of a block diagram based on a core function of each structure and device in order to prevent a concept of the present disclosure from being ambiguous.
In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.
In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.
A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.
The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.
In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The technology described in the present specification may be used in various wireless communication systems such as CDMA (code division multiple access), FDMA (frequency division multiple access), TDMA (time division multiple access), OFDMA (orthogonal frequency division multiple access), SC-FDMA (single carrier frequency division multiple access), and the like. CDMA may be implemented with wireless technologies such as UTRA (universal terrestrial radio access) or CDMA2000. TDMA may be implemented with wireless technologies such as GSM (global system for mobile communications)/GPRS (general packet radio service)/EDGE (enhanced data rates for GSM evolution). OFDMA may be implemented with wireless technologies such as IEEE (institute of electrical and electronics engineers) 802.11 (Wi-Fi), IEEE 802.16 (WiMAX), IEEE 802-20, E-UTRA (evolved UTRA), LTE (long term evolution), 5G NR, and the like.

The technology described in the present specification may be implemented with 6G wireless technology and may be applied to various 6G systems. For example, a 6G system may have key factors such as enhanced mobile broadband (eMBB), ultra-reliable low latency communications (URLLC), massive machine-type communication (mMTC), artificial intelligence (AI) integrated communication, a tactile internet, high throughput, high network capacity, high energy efficiency, low backhaul and access network congestion, and enhanced data security.

To clarify description, it is described based on a 3GPP communication system (e.g., LTE-A, NR, 6G), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR/6G may be referred to as a 3GPP system. "xxx" means a detailed number for a standard document. LTE/NR/6G may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality

- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

As described above, an NR system is a new clean-slate type mobile communication system having characteristics such as high performance, low latency, and high availability, as a successor technology of LTE (long term evolution). In the case of the NR system, all available spectrum resources may be utilized, ranging from a low-frequency band of less than 1 GHz, to a mid-frequency band of 1 GHz to 10 GHz, and a high-frequency (millimeter-wave) band of 24 GHz or higher. Based on the fundamental technologies of the NR system, a 6G mobile communication system (hereinafter, a 6G system) is being developed.

The 6G system aims at (i) a very high data rate per device, (ii) a very large number of connected devices, (iii) global connectivity, (iv) very low latency, (v) reducing energy consumption of battery-free IoT (internet of things) devices, (vi) ultra-high reliability connectivity, and (vii) connected intelligence having machine learning capability. A vision of the 6G system may have four aspects such as intelligent connectivity, deep connectivity, holographic connectivity, and ubiquitous connectivity.

A new RAT system (hereinafter, a next-generation RAT system) including an NR system and a 6G system uses an OFDM transmission scheme or a transmission scheme similar thereto. The next-generation RAT system may follow OFDM parameters different from OFDM parameters of LTE. Alternatively, the next-generation RAT system may follow the numerology of existing LTE/LTE-A as it is, but may support a larger system bandwidth (for example, 100 MHz). Alternatively, one cell may support a plurality of numerologies. That is, UEs operating with different numerologies may coexist within one cell.

A numerology corresponds to one subcarrier spacing in a frequency domain. As a reference subcarrier spacing is scaled by an integer N, a different numerology may be defined.

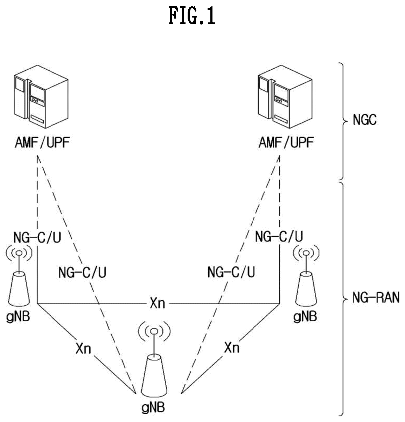

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

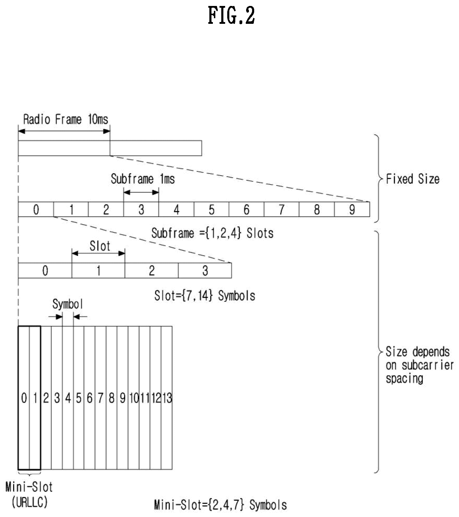

FIG. 2 illustrates a frame structure in a wireless communication system to which the present disclosure may be applied.

A next-generation RAT system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a next-generation RAT system.

Hereinafter, an OFDM numerology and frame structure which may be considered in a next-generation RAT system will be described. A plurality of OFDM numerologies supported in a next-generation RAT system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

The next-generation RAT system supports a plurality of numerologies (or subcarrier spacings (SCSs)) to support various 5G/6G services. For example, when the SCS is 15 kHz, a wide area in traditional cellular bands is supported; when the SCS is 30 kHz/60 kHz, dense-urban environments, lower latency, and a wider carrier bandwidth are supported; and when the SCS is 60 kHz or higher, a bandwidth greater than 24.25 GHz is supported to overcome phase noise. Although not described in Table 1, in the case of a 6G system, SCSs of 480 kHz/960 kHz may be additionally supported.

Frequency bands of the next-generation RAT system are defined as various types of frequency ranges (for example, FR1, FR2, etc.). For example, FR1 and FR2 may be configured as shown in Table 2 below. In addition, FR2 may refer to millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in a next-generation RAT system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10$ms. Here, a radio frame is configured with 10 subframes having a duration of $T_{sf} = (\Delta f_{max} N_f/1000) \cdot T_c = 1$ms, respectively. In this case, there may be one set of frames for an uplink and one set of frames for a downlink.

In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu}-1\}$ in a subframe and are numbered in an increasing order of $n_{s,f}^{\mu} \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a next-generation RAT system, an antenna port, a resource grid, a resource element, a resource block, a carrier part, etc. may be considered. Hereinafter, the physical resources which may be considered in a next-generation RAT system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

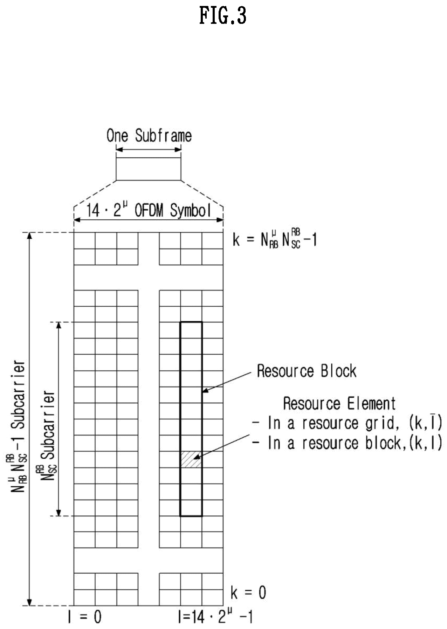

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In a next-generation RAT system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radio-frequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n^{\mu}_{CRB} = \left\lfloor \frac{k}{N^{RB}_{sc}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n^{\mu}_{CRB} = n^{\mu}_{PRB} + N^{start,\mu}_{BWP,i}$$

$N_{BWP,i}^{start,\mu}$ is a common resource block that a BWP starts relatively to common resource block 0.

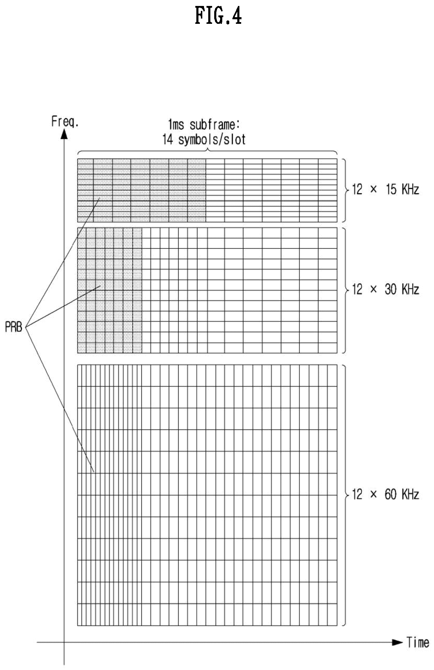

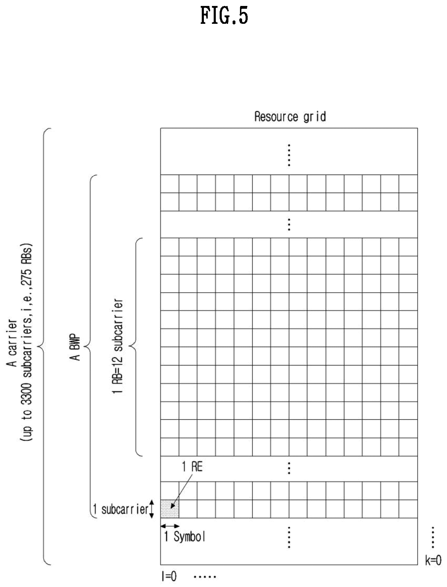

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In a next-generation RAT system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP.

Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.).

In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

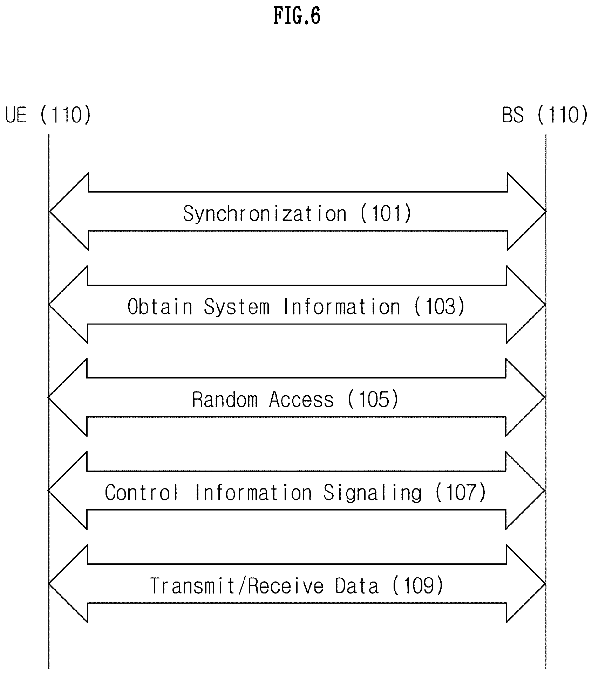

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

The second node of FIG. 6 supports dynamic spectrum sharing (DSS) and may provide connectivity to not only a node in which 6G technology is implemented but also a node in which wireless communication technology prior to 6G (e.g., 5G, 4G) is implemented. That is, the first node of FIG. 6 may be a node in which 6G technology is implemented or a node in which wireless communication technology prior to 6G (e.g., 5G, 4G) is implemented. In addition, the first node and/or the second node may support a full duplex mode as well as a non-overlapping full duplex mode.

In FIG. 6, for convenience of description, the first node and the second node are assumed to be a user equipment (UE) and a base station, respectively, and operations in which the UE (110) and the base station (120) transmit and/or receive data and operations performed prior thereto are exemplified. However, the operations of FIG. 6 are not limited to operations between the UE and the base station and may be interpreted as operations between the first node and the second node. In addition, FIG. 6 exemplifies direct transmission and reception of wireless signals between the UE (110) and the base station (120), but one or more intermediate points may exist between the UE (110) and the base station (120), and wireless signals may be transmitted and received via the one or more intermediate points.

Referring to FIG. 6, in step 101, the UE (110) and the base station (120) perform synchronization. For example, the UE (110) performs an initial cell search operation. Specifically, the UE (110) may detect at least one synchronization signal for base station access transmitted from the base station (120) according to predefined rules. Here, the synchronization signal may include a plurality of synchronization signals classified according to a structure or a purpose (e.g., a first synchronization signal (for example, a primary synchronization signal), a second synchronization signal (for example, a secondary synchronization signal), etc.). Through this, the UE (110) may identify boundaries of units (for example, frames, subframes, slots, and/or symbols) constituting wireless signal transmission of the base station (120) and may acquire information on the base station (120) (e.g., a cell identifier).

In step 103, the UE (110) acquires system information transmitted from the base station (120). The system information is information related to attributes, characteristics, and/or capabilities of the base station (120) required for accessing the base station (120) and using services, and may be classified according to content (e.g., whether it is essentially required for access), a transmission structure (e.g., a used channel, whether it is provided on demand), and the like. For example, the system information may be classified into first system information (e.g., a master information block (MIB), primary system information), second system information (e.g., a system information block (SIB), secondary system information), and the like. If necessary, the UE (110) may transmit a signal requesting system information before receiving the system information. However, the request and provision of the system information may be performed after a random access procedure described later.

In step 105, the UE (110) and the base station (120) perform a random access procedure. Based on information related to a channel for the random access procedure of the base station (120) acquired through system information (e.g., a channel location, a channel structure, a structure of supported preambles, etc.), the UE (110) may transmit and/or receive at least one message for the random access procedure (e.g., a random access preamble, a random access response (RAR) message, etc.). For example, the UE (110) may transmit a first message (e.g., a preamble, MSG1) through the channel for the random access procedure, receive a second message (e.g., an RAR message, MSG2), transmit, to the base station (120), a third message (e.g., MSG3) including information related to the UE (110) (e.g., identification information) by using scheduling information included in the second message, and receive a fourth message (e.g., MSG4) for contention resolution and/or connection establishment. As another example, the first message and the third message may be transmitted and received as one message, or the second message and the fourth message may be transmitted and received as one message.

In step 107, the UE (110) and the base station (120) perform signaling of control information. Here, the control information may be defined in various layers, such as a layer that controls a connection (e.g., a radio resource control (RRC) layer), a layer that handles mapping between logical channels and transport channels (e.g., a media access control (MAC) layer), and a layer that processes physical channels (e.g., a physical (PHY) layer). For example, the UE (110) and the base station (120) may perform at least one of signaling for establishing a connection, signaling for determining configurations related to communication, and signaling for indicating allocated resources.

In step 109, the UE (110) and the base station (120) transmit and/or receive data. In other words, the UE (110) and the base station (120) may process data and transmit and/or receive the data based on signaling of control information. For example, in the case of transmitting data, the UE (110) or the base station (120) may perform at least one of channel encoding, rate matching, scrambling, constellation mapping, layer mapping, waveform modulation, antenna mapping, and resource mapping on information bits. Conversely, in the case of receiving data, the UE (110) or the base station (120) may perform at least one of signal extraction from resources, per-antenna waveform demodulation, signal placement considering layer mapping, constellation demapping, descrambling, and channel decoding.

Table 5 represents an example of a DCI format in a next-generation RAT system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted. DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-Co Location (QCL)

Antenna ports are defined such that the channel through which a symbol on an antenna port is carried can be inferred from the channel through which another symbol on the same antenna port is carried. Two antenna ports are said to be in a QC/QCL (quasi co-located or quasi co-location) relationship if the properties of the channel through which a symbol on one antenna port is carried can be inferred from the channel through which a symbol on another antenna port is carried.

Here, the channel characteristics include at least one of delay spread, Doppler spread, frequency/Doppler shift, average received power, received timing/average delay, and spatial Rx parameter. Here, the spatial Rx parameter refers to a spatial (reception) channel characteristic parameter such as angle of arrival.

The UE may be configured with a list of up to M TCI-State configurations in the higher layer parameter PDSCH-Config to decode the PDSCH according to the detected PDCCH having the intended DCI for the UE and the given serving cell. The M depends on the UE capability.

Each TCI-State includes parameters for establishing a quasi co-location relationship between one or two DL reference signals and the DM-RS port of the PDSCH.

The quasi co-location relationship is configured by the higher layer parameters qcl-Type1 for the first DL RS and qcl-Type2 (if set) for the second DL RS. For two DL RSs, the QCL types are not the same, regardless of whether the references are the same DL RS or different DL RSs.

The quasi co-location type corresponding to each DL RS is given by the higher layer parameter qcl-Type of QCL-Info, and can take one of the following values:

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, if a target antenna port is a specific NZP CSI-RS, the corresponding NZP CSI-RS antenna port(s) can be indicated/configured to be QCL with a specific TRS from a QCL-Type A perspective and with a specific SSB from a QCL-Type D perspective. A UE that has received such an indication/configuration may receive the corresponding NZP CSI-RS using the Doppler and delay values measured at the QCL-TypeA TRS, and apply the reception beam used for QCL-TypeD SSB reception to the corresponding NZP CSI-RS reception.

The UE may receive an activation command by MAC CE signaling used to map up to eight TCI states to codepoints of the DCI field 'Transmission Configuration Indication'.

Artificial intelligence (AI) / machine learning (ML) related operations

AI/ML may be introduced/applied to the next-generation RAT system described in the present disclosure.

Incorporating AI into communications can streamline and improve real-time data transmission. AI can use numerous analytics to determine how complex target tasks should be performed. This means AI can increase efficiency and reduce processing delays. Time-consuming tasks such as handover, network selection, and resource scheduling can be performed instantly using AI. AI can also play a crucial role in machine-to-machine (M2M), machine-to-human, and human-to-machine communications. Furthermore, AI can facilitate rapid communication in brain-computer interfaces (BCIs). AI-based communication systems can be supported by metamaterials, intelligent structures, intelligent networks, intelligent devices, intelligent cognitive radios, self-sustaining wireless networks, and machine learning.

Hereinafter, a functional framework for AI/ML operations is described.

Hereinafter, for a more specific explanation of AI (or AI/ML), the terms can be defined as follows.

- Data collection: Data collected from network nodes, management entities, or terminals as a basis for AI model training, data analysis, and inference.
- AI Model: A data-driven algorithm that applies AI technology to generate a set of outputs containing prediction information and/or decision parameters based on a set of inputs.
- AI/ML Training: An online or offline process of training an AI model by learning features and patterns that best represent the data and obtain a trained AI/ML model for inference.
- AI/ML Inference: The process of making predictions or inducing decisions based on collected data and the AI model using a trained AI model.

The Life Cycle Management (LCM) process for AI/ML models (i.e., model training, model deployment, model inference, model monitoring, model update, etc.) can be divided into functionality-based LCM and model-based LCM. In functionality-based LCM, AI/ML models may not be identified by the network, and the network can direct the activation/deactivation/fallback/switching of AI/ML functionality. In model-ID (identifier)-based LCM, AI/ML models can be identified by the network, and the network/terminal can activate/deactivate/select/switch the AI/ML model through the model ID.

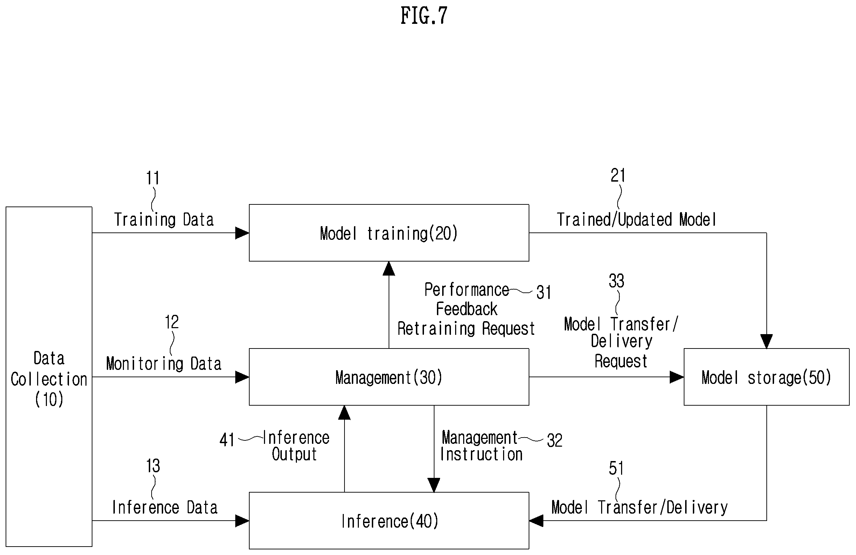

FIG. 7 illustrates a general functional architecture relevant to both Functionality-based LCM and Model-based LCM. Some of the functions or some of the data/information/command flows (i.e., arrows) illustrated in FIG. 7 may be omitted.

Referring to FIG. 7, a general functional framework can be configured to include a data collection function (10), a model training function (20), a management function (30), an inference function (40), and a model storage function (50).

The Data Collection function (10) is a function that provides input data to the Model Training function (20), Management function (30), and Inference function (40). The Data Collection function (10) can perform data preparation based on raw data and provide input data processed through data preparation. Examples of raw data may include received data/measurement data from terminals or other network entities, inference/output of AI/ML models, etc. The Data Collection function (10) may be performed by a single entity (e.g., terminal, network node, etc.) or may be performed by multiple entities.

Here, training data (11) refers to data required as input for the AI/ML Model Training function (20). Monitoring data (12) refers to data required as input for the Management (30) of the AI/ML model or AI/ML function. Inference data (13) refers to data required as input for the AI/ML Inference function (30).

The Model Training function (20) is a function that performs AI/ML model training, validation, and testing, which can generate model performance metrics that can be used as part of the AI/ML model testing procedure. The Model Training function (20) can perform data preparation (e.g., data pre-processing and cleaning, forming, and transformation) based on the Training Data (11) transferred from the Data Collection function (10), if necessary.

Trained/Updated Model (21): If there is a Model Storage function (50), it is used to pass a trained, validated and tested AI/ML model to the Model Storage function (50) or to pass an updated version of the model to the Model Storage function (50).

The Management function (30) is a function that supervises the operation of the AI/ML model or AI/ML function. In addition, the Management function (30) may perform a decision to ensure appropriate inference operation based on data received from the Data Collection function (10) (i.e., Monitoring Data (12)) and/or data received from the Inference function (40) (i.e., Inference Output (41)).

Management Instruction (32) is information required as input to manage the Inference function (40). The related information may include selection/(de)activation/switching of an AI/ML model or an AI/ML-based function, and may also include fallback to a non-AI/ML operation (i.e., not relying on the inference process).

A Model Transfer/Delivery Request (33) can be used to request model(s) from Model Storage (50).

Performance Feedback/Retraining Request (31) refers to information required as input to the Model Training function (20) (e.g., for the purpose of (re)training or updating the model).

The Inference function (40) is a function that provides output from the process of applying an AI/ML model or AI/ML function using data (i.e., Inference Data (13)) provided by the Data Collection (10) as input. Data preparation (e.g., data preprocessing and cleaning, formatting and transformation) may be performed based on the Inference Data (13) delivered by the Data Collection (10). The Inference function (40) may also perform data preparation (e.g., data preprocessing and cleaning, forming and transformation) based on the Inference Data (13) provided by the Data Collection function (10), if necessary.

Inference Output (41) is data used in the Management function (30) to monitor the performance of an AI/ML model or AI/ML function. Inference Output (41) may include the inference output of the AI/ML model generated by the Inference function (30), and the details of the inference output may vary depending on the use case.

The Model Storage function (50) is a function for storing a learned/updated model that can be used to perform the Inference function (40). The Model Storage function (50) illustrated in FIG. 7 can be used as a reference point (if any) when applicable to protocol termination, model transmission/delivery, and related processes. Furthermore, the Model Storage function (50) is merely an example and is not intended to limit the storage location of actual AI/ML models, and may be omitted.

Model Transfer/Delivery (51) is used to transfer AI/ML models to inference functions.

The level of cooperation can be defined as follows depending on the capability of AI/ML functions between multiple nodes, and variations due to combination of multiple levels or separation of any one level are also possible.

Cat 0a) No collaboration framework: AI/ML algorithms are purely implementation-based and do not require any changes to the wireless interface.

Cat 0b) This level corresponds to a framework with a modified wireless interface tailored to efficient implementation-based AI/ML algorithms, but without collaboration.

Cat 1) Inter-node support is provided to improve the AI/ML algorithms of each node. For example, this applies when a specific node receives support from another node (for training, adaptation, etc.) and vice versa. At this level, model exchange between network nodes is not required.

Cat 2) Joint AI/ML tasks can be performed between multiple nodes. This level requires AI/ML model commands or exchange between network nodes.

FIG. 7 is a diagram illustrating an overall functional framework for an AI/ML model, and not all functions and/or all data/information/command signals illustrated in FIG. 7 may be performed within a specific node, but only some of them may be performed.

AI/ML models can be divided into one-side models and two-side models depending on whether training and/or inference is performed on one node or jointly/sequentially on multiple nodes.

A one-side model may refer to an AI/ML model in which inference is performed entirely by a single node (e.g., a terminal or network). Here, the training of the AI/ML model may also be performed entirely by a single node. The training and inference of the AI/ML model may be performed by the same node, or they may be performed by separate nodes.

A two-side model may refer to an AI/ML model in which joint inference is performed across multiple nodes (e.g., terminals and networks). Joint inference means that inference is performed jointly across multiple nodes. For example, a first part of the inference may be performed by a first node, and the remaining part of the inference may be performed by a second node. Two-side models may be categorized into several types, as follows, depending on the training method of the AI/ML model.

- First type: AI/ML models can be trained on a single node. In this case, joint training can be performed. The trained model can then be distributed to other nodes/objects.
- Second type: Joint training of AI/ML models can be performed on multiple nodes/entities (e.g., networks and terminals) respectively. Joint training can mean that model generation (e.g., CSI generation part) and model reconstruction (CSI compression by sub-use case) are trained in the same loop for forward activation and backward gradient. In this type, joint training can include both simultaneous training (i.e., model generation training and model reconstruction training are performed simultaneously) and sequential training (i.e., model reconstruction training is performed after model generation training).
- Third type: Separate training of AI/ML models can be performed on multiple nodes (e.g., networks and terminals). Separate training may mean that training starts sequentially on one node and continues on other nodes. In this case, if the first node first performs the AI/ML model and shares the training data with the second node, the second node can perform the AI/ML model using the shared training data. For example, training for the CSI generation part may be performed by the terminal, and CSI reconstruction may be performed by the network.

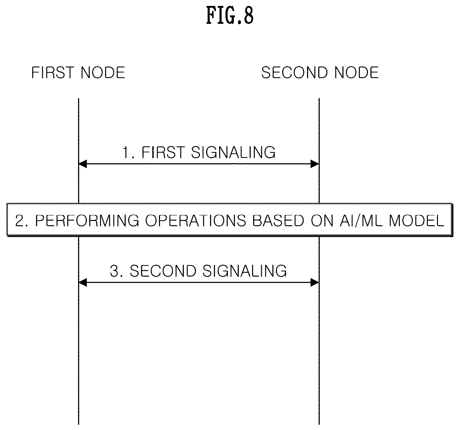

The operations described in the present disclosure described below can be explained/interpreted based on the AI/ML model as shown in FIG. 8 below, even without separate mention (i.e., without explicit mention of by/based on/for the AI/ML model).

In addition, unless specifically limited in the description of the present disclosure, the AI/ML model may correspond to a one-side model in which inference is entirely performed by one node or a two-side model in which joint inference is performed by multiple nodes.

Step 1: In the description of the present disclosure described below, signaling (e.g., information/data/channel/-signal, etc.) or a set of signaling between a specific node (e.g., terminal, network, etc.) and another node may be interpreted as the signaling or set of signaling of Step 1 used to perform an operation based on an AI/ML model, even if not otherwise mentioned. For example, it may correspond to training data for training (i.e., generation and/or reconstruction) the AI/ML model of FIG. 7, or correspond to inference data used for inference of the AI/ML model, or correspond to feedback for the AI/ML model, etc. If signaling between nodes is not required prior to an operation based on an AI/ML model in the present disclosure, Step 1 may be omitted. If a one-side model is used in the present disclosure, the unidirectional/bidirectional signaling (set) in the present disclosure may correspond to the signaling of Step 1. In addition, when a two-side model is used in the present disclosure, the one-way/two-way signaling in the present disclosure may correspond to one-stage signaling, and also, a repetitive signaling operation may correspond to one-stage signaling.

For example, in AI/ML model-based beam management (BM), if a base station predicts (i.e., infers) beam(s) with good quality based on an AI/ML model, the base station can receive quality/intensity information for multiple beams from a terminal. Furthermore, if a terminal predicts (i.e., infers) beam(s) with good quality based on an AI/ML model, the terminal may receive multiple beams from the base station.

Step 2: In the description of the present disclosure described below, an operation (e.g., calculation, selection, prediction, etc.) in a specific node (e.g., terminal, network, etc.) or a joint operation (e.g., calculation, selection, prediction, etc.) in multiple nodes (e.g., terminal, network, etc.) may correspond to a step 2 operation based on one or more functions in the functional framework of the AI/ML model, even if not mentioned separately. For example, it may correspond to training (i.e., generation and/or reconstruction) of the AI/ML model of FIG. 7 or inference of the AI/ML model, etc. When a one-side model is used, an operation performed by a single node in the present disclosure may correspond to a step 2 operation, and also, when a two-side model is used, a joint operation performed by multiple nodes in the present disclosure may correspond to a step 2 operation.

For example, in an AI/ML model-based BM, a base station can use quality/intensity information for multiple beams received from a terminal as inference data to predict (i.e., infer) beam(s) with good quality based on an AI/ML model. In addition, the terminal can measure multiple beams received from the base station and use the measurement results as inference data to predict (i.e., infer) beam(s) with good quality based on an AI/ML model.

Step 3: In the description of the present disclosure described below, signaling (e.g., information/data/channel/-signal, etc.) or a set of signaling between a specific node (e.g., terminal, network, etc.) and another node may be interpreted as a three-step signaling or a set of signaling generated due to (as a result of) an operation based on an AI/ML model, even if not otherwise mentioned. For example, it may correspond to an output resulting from inference of the AI/ML model in FIG. 7. If signaling between nodes is not required as a result of an operation based on an AI/ML model in the present disclosure, step 3 may be omitted. If a one-side model is used in the present disclosure, a one-way/two-way signaling (set) in the present disclosure may correspond to the three-step signaling. In addition, when a two-side model is used in the present disclosure, the one-way/two-way signaling in the present disclosure may correspond to three-stage signaling, and also, the repetitive signaling operation may correspond to three-stage signaling.

For example, in an AI/ML model-based BM, a base station may transmit to a terminal beam(s) predicted based on the AI/ML model as candidates so that the terminal can determine an optimal beam. Furthermore, the terminal may report to the base station beam(s) predicted based on the AI/ML model to request the base station to transmit candidate beams as candidates for determining an optimal beam.

Method for configuring UE report/request information for AI/ML-based beam management

In describing the present disclosure, "/" may mean "and", "or" or "and/or", and "beam" may mean a source RS for a "spatial filter/spatial parameter" or a "spatial relation". That is, "spatial filter", "spatial parameter", "source RS for spatial relation", etc. may be expressed interchangeably. Additionally, "beam" may also be interpreted as a QCL (Type-D) RS, a TCI state or (in case of uplink) a spatial relation RS.

In a next-generation RAT system (e.g., a 5G NR system, a 6G system, etc.), a beam management (BM) method may include a beam measurement/reporting method and a beam indication method by a base station. According to configuration/indication of the base station, a UE performs beam measurement/reporting, and based on beam report information resulting therefrom, the base station may perform beam activation and/or beam indication to the UE.

In relation to the above-described beam management process, in an environment in which movement of the UE is large (e.g., UE rotation, a fast moving UE, etc.) or an environment in which presence/positions of scatterers, reflectors, blockers, etc. for beams/wireless channels rapidly change due to movement of objects around the UE (e.g., an indoor hotspot, etc.), beam measurement/reporting may need to be performed frequently in order to find an optimal beam. Accordingly, in such an environment, problems such as RS overhead, an implementation burden due to measurement/reporting of the UE, and increased power consumption may occur.

In order to solve the above-described problems, in a next-generation RAT system, a UE-driven beam management method (i.e., a beam management method initiated by a UE) and/or an artificial intelligence (AI)/machine learning (ML)-based beam management method may be considered.

A UE-driven beam management method may include a scheme of omitting or simplifying a beam activation/indication process of a base station in conjunction with beam reporting of a UE. In addition, the UE-driven beam management method may include an event-based beam reporting scheme in which the UE performs beam reporting only when necessary (e.g., degradation of performance of a serving beam, superior performance of an alternative beam), instead of existing base station configuration/indication-based beam reporting.

An AI/ML-based beam management method that performs enhanced beam management by using AI/ML may be classified into a "beam management performance enhancement scheme through spatial beam prediction" and a "beam management performance enhancement scheme through temporal beam prediction".

The "beam management performance enhancement scheme through spatial beam prediction" collectively refers to a scheme in which beam management is performed based on current/past beam RS measurement results and UE location/mobility information by UE AI/ML (i.e., AI/ML running in a UE) and/or network AI/ML (i.e., AI/ML running in a network), thereby improving beam management accuracy with low RS overhead. When the above scheme is applied, even when results measured from a small number of beam RSs are utilized, performance similar to that in a case of beam selection from a larger number of beam RSs may be obtained.

The "beam management performance enhancement scheme through temporal beam prediction" collectively refers to a scheme in which UE AI/ML and/or network AI/ML predicts quality of beam(s) at future time point(s) based on current/past beam RS measurement results, UE location/mobility information, time-varying characteristics of a channel, and the like.

For example, for AI/ML-based beam management, beam management (BM)-case 1 and BM-case 2 may be supported/considered for characterization and baseline performance evaluation. Specifically, BM-case 1 may include a case in which only the above-described spatial beam prediction is performed, and BM-case 2 may include a case in which both the above-described temporal beam prediction and spatial beam prediction are performed, and a case in which only the temporal beam prediction is performed.

In relation thereto, three types of beam RS sets, namely an RS set A, an RS set B, and an RS set C, may be defined. Here, the RS set A refers to a set of beam RS(s) for which a UE or a network performs prediction. The RS set B refers to a set of beam RS(s) used as inputs to an AI/ML model in order to perform prediction for the RS set A. The RS set C refers to a set of beam RS(s) measured by a UE, and the RS set B may be identical to the RS set C or may have a subset relationship therewith.

For example, the following relationship may be established for the RS set A, the RS set B, and the RS set C.

- The RS set A may include 128 beams (e.g., beam RS #0, beam RS #1, ..., beam RS #127). A base station may transmit beams of the RS set A to a UE with a (relatively long) specific period or on-demand, and the transmitted beams of the RS set A may be used for a purpose of performance monitoring of network AI/ML or UE AI/ML.
- The RS set C may include 32 beams (e.g., beam RS #0, beam RS #4, beam RS #8, ..., beam RS #124). That is, the RS set C may be configured as one beam RS out of every four beam RSs of the RS set A. By transmitting the RS set C to the UE periodically/aperiodically by a base station, the UE may perform beam measurement and beam reporting. As an example, the UE may perform a reporting operation for a specific beam among beams of the RS set A through spatial beam prediction.

- The RS set B may include a subset of the RS set C and may refer to a beam set actually used as an input to an AI/ML model. According to implementation of the AI/ML model, all beams or some beams of the RS set C may be used as actual AI/ML inputs. As an example, only N beams having the highest quality or beam(s) having beam quality equal to or greater than a predetermined threshold value among all beams of the RS set C may be used in the AI/ML model.

In addition, in a next-generation RAT system, in an AI/ML-based beam management method, a scheme in which a UE requests transmission of a beam RS from a base station may be considered.

For example, for training of a UE-side AI/ML model (i.e., an AI/ML model running in a UE), a considerable number of beam measurement values (e.g., RSRP, SINR, etc.) may be required, and for this purpose, the UE may request transmission of a beam RS from the base station. As another example, for performance monitoring of the UE-side AI/ML model, predicted beams and/or actual beams may need to be measured/compared, and for this purpose, the UE may request transmission of a beam RS from the base station.

The above-described UE-driven beam management method and/or AI/ML-based beam management method may be introduced/applied for efficient beam management in a next-generation RAT system.

Hereinafter, in the present disclosure, with respect to a beam management method, a method of configuring information transmitted by a UE when performing beam-related reporting/requesting to a base station will be described in detail.

In a conventional wireless communication system, a UE may report, to a base station, information for beam ID(s) requested/preferred by the UE and quality values thereof through beam reporting. However, in such beam reporting, the number of beams reported by the UE is configured by the base station, and thus there is a limitation in that the UE cannot report/request a desired number of beams. In addition, for reception beam selection/refinement (Rx beam selection/refinement) of the UE, a procedure in which the base station repeatedly transmits a specific beam or a serving beam is required, but there is a limitation in that the UE cannot perform a request/report for this.

In addition, in the above-described UE-driven beam management method and/or AI/ML-based beam management method, although the number of beams required by the UE may vary depending on a situation of the UE, a scheme for configuring beam reporting information supported in a conventional wireless communication system has a problem in that the number of beams is controlled/configured by the base station. Furthermore, a scheme for configuring beam reporting information supported in a conventional wireless communication system has a limitation in that reporting/requesting for RS beam selection/refinement is not supported.

In order to solve the above-described problems/limitations, in relation to a UE-driven beam management method and/or an AI/ML-based beam management method, the present disclosure describes in detail a method of configuring information transmitted by a UE to a base station (or a network) when the UE performs beam management-related reporting/requesting.

In beam management-related reporting/requesting by a UE, the UE may transmit, to a base station, information including at least one of the following.

In the following description, a beam RS and a beam RS set may collectively refer to an RS (e.g., a CSI-RS, an SSB, etc.) for representing a beam (e.g., a spatial filter, a transmit/receive (Tx/Rx) filter, etc.) and a set composed of the RS(s). Accordingly, in the present disclosure, the term beam RS (set) may be replaced with terms such as an RS (set) related to a beam or a beam (set).

(1) <u>Information indicating a transmit beam RS and/or a transmit beam RS set</u>

In beam management-related reporting/requesting by a UE, the UE may transmit, to a base station, information for beam RS(s) for which transmission by the base station is requested. That is, in beam reporting/requesting by the UE, it may be desirable that information on which beam(s) are selected/requested/reported by the UE is transmitted together.

In this regard, information for the beam(s) may be configured as information indicating beam RS(s) or a beam RS set. In this case, in order to avoid ambiguity of a payload size for reporting/requesting, a size of a reported beam RS (set) may need to be agreed/defined between the base station and the UE.

However, as described above, in the case of a UE-driven beam management method and/or an AI/ML-based beam management method, a required size of a beam RS (set) may be variable depending on a situation of the UE. As an example, as mobility of the UE increases, the UE may request/report a larger number of beams.

In consideration of the above, information indicating a transmit beam and/or a transmit beam set may be efficiently configured based on a bitmap form rather than being configured based on an ID (e.g., an RS ID) as in the conventional approach. In this case, each bit of the bitmap may be mapped to a beam RS or a beam RS set configured/designated by the base station.

Additionally or alternatively, information indicating a transmit beam and/or a transmit beam set may be configured based on a separate encoding scheme. As an example, the separate encoding scheme may be an encoding scheme divided into two or more parts/fields, and may include a scheme in which a size/number of information in a second (or remaining) part/field is determined according to information of a first part/field.

Specifically, information indicating a transmit beam and/or a transmit beam set may be configured with two parts/fields (i.e., a first part/field and a second part/field). In this case, the UE may report, to a base station, a number of beam RSs (set) reported/requested through the first part/field, and may report ID(s) of the beam RS(s) (set) for the reporting/requesting through the second part/field. Here, an amount/number of information of the second part/field has a characteristic of being determined by information reported in the first part/field.

Additionally or alternatively, information indicating a transmit beam and/or a transmit beam set may be configured based on a set ID. For example, when a plurality of beam RS sets are configured between a base station and a UE, the UE may be configured/defined to report/request a specific beam RS set among the plurality of beam RS sets. In this case, ID information may be used to distinguish/identify the beam RS sets. In this case, a number of beam RSs included in each set may be configured differently. When the information is configured based on a set ID, by reporting/requesting beam RS set ID(s), a technical effect of flexibly selecting a number of beams to be reported/requested may be obtained.

(2) <u>Information indicating a repetition number for a transmit beam RS and/or a transmit beam RS set</u>

The information may be configured/indicated for each transmit beam RS or transmit beam RS set, and through this, a UE may report/request repetition transmission of a beam RS (set) to a base station.

When the information is used, limitations of the conventional scheme as described above, for example, a limitation in which a procedure in which a base station repeatedly transmits a specific beam or a serving beam is required for reception beam selection/refinement of a UE, but the UE cannot perform a request/report therefor, may be resolved.

In this case, since performing repeated transmission by the base station only for a number corresponding to reception beam candidates for reception beam selection of the UE may prevent an unnecessary increase in RS overhead, it may be efficient that, upon beam reporting/requesting, the UE reports/requests information on a required repetition count of the beam RS (set) to the base station together.

By configuring the above-described information of (1) together with or selectively with the information, base station transmit and UE receive beam sweeping (e.g., a P-1 scheme), base station transmit beam sweeping (e.g., a P-2 scheme), and UE receive beam sweeping (e.g., a P-3 scheme) may be supported.

For example, for UE receive beam sweeping, the UE may omit information indicating a transmit beam RS and/or a transmit beam RS set, and may report/request only information indicating a repetition number to the base station. In this case, repeated transmission of a current serving beam (e.g., a most recently indicated TCI) may be reported/requested. As another example, for base station transmit beam sweeping, the UE may omit information indicating a repetition number, or may report/request with the repetition number set to '1' (i.e., no repeat). As yet another example, for base station transmit and UE receive beam sweeping, the UE may report/request both information indicating a transmit beam RS and/or a transmit beam RS set and information indicating a repetition number.

Hereinafter, a detailed method of configuring a field of information indicating a repetition number for a transmit beam RS and/or a transmit beam RS set will be described. The information may be configured based on one or more of schemes 1 to 3 described below.

(Scheme 1) The information may be configured as an information field for reporting/requesting a single repetition number. As an example, the single repetition number may be commonly applied to all beam RSs (sets) reported/requested by a UE.

(Scheme 2) The information may be configured as an information field for reporting/requesting an individual repetition number for each beam RS (set) reported/requested by a UE. As an example, the repetition number may be reported/requested for each beam RS ID or each beam RS set ID.

(Scheme 3) The information may be configured as an information field for reporting/requesting a predetermined/configured repetition number (e.g., Rep_Number, Nrof_Rep).

In this regard, when a UE selects and reports/requests a repetition number for each beam RS (set), and the UE is able to select a number (e.g., N) of beam RS (sets), there may occur a problem in that configuration of information on the repetition number and a payload size vary according to the selected number of beam RS (sets). In order to solve such a problem, a scheme may be applied in which a number of repetition numbers reported/requested by the UE is fixed to a specific number (e.g., M), and a mapping relationship between repetition numbers and beam RS (sets) is defined/set according to a value of the number of beam RS (sets). Here, the specific number may be configured/indicated by a network such as a base station.

For example, when the number of beam RS (sets) selected by the UE is the same as the number of repetition numbers reported/requested by the UE (e.g., N = M), a one-to-one mapping relationship may be applied.

As another example, when a number of beam RS (sets) selected by a UE is greater than a number of repetition numbers reported/requested by the UE (e.g., N > M), a one-to-one mapping relationship or a many-to-one mapping relationship may be applied. That is, one repetition number may correspond to a plurality of beam RSs. As an example, beam RS(s) may be grouped according to an ID order of beam RS (sets), and may be mapped to M repetition number fields. As another example, by considering beam quality (e.g., RSRP, SINR, etc.), beam RSs having low quality may be preferentially grouped and mapped. As a specific example, beams having high beam quality may be mapped to as few beams as possible per repetition number, and beams having low beam quality may be mapped to as many beams as possible per repetition number.

As yet another example, when a number of beam RS (sets) selected by a UE is smaller than a number of repetition numbers reported/requested by the UE (e.g., N < M), it may be set/defined that information is configured for N beam RS (sets) in order, and a specific value is reported for remaining repetition number value(s). As an example, the specific value may be all zero values, a reserved codepoint, or a codepoint specified for the corresponding case. Alternatively, in this case, it may be set/defined that a value for a specific other beam RS (set) is redundantly configured. Alternatively, for this case, what information is to be configured for the remaining repetition number value(s) may be determined by the UE (autonomously or by implementation). This is because the corresponding information may be unnecessary information for the base station.

Additionally or alternatively, the above-described method of configuring information on repetition numbers may be applicable not only to a configuration scheme based on a bitmap form, but also to a configuration scheme based on an ID. Through this, an amount of information for the corresponding information may be reduced or controlled. In this regard, a network such as a base station may independently configure a number of beam RS (sets) selected by a UE (e.g., an N value) and a number of repetition numbers reported/requested by the UE (e.g., an M value).

(3) Information indicating a number of (neighboring) beams

By reporting/requesting, to a base station, a number of required (neighboring) beam(s), a UE may enable the base station to efficiently perform subsequent transmission of beam RSs.

For example, by configuring the above-described information of (1) together with the corresponding information (i.e., the information of (3)) as information to be reported/requested, and by reporting an L value corresponding to the information of (3) together with an ID of a requested beam RS, the UE may report/request L neighboring beams for the corresponding beam.

As another example, the UE may configure information to be reported/requested using only the corresponding information (that is, the information of (3)), and may report/request L neighboring beams for a current serving beam (e.g., an activated/indicated TCI).

(4) Information for a beam angle and/or a beam angle range

In an AI/ML-based beam management method, in order to improve performance of a UE-side AI/ML model, a method of providing absolute/relative beam angles for base station beam(s) to a UE as assist information may be considered. Here, a beam angle may refer to a boresight angle, a beam pointing angle, a value related to an energy peak direction of a main lobe, or the like.

In this regard, the UE may report/request, to a base station, required beam angle information and/or beam angle range information, and through this, the base station may efficiently perform subsequent transmission of beam RSs.

For example, the UE may configure the above-described information of (1) together with the corresponding information (i.e., the information of (4)) as information to be reported/requested, and may report an angle range value (e.g., X degrees) corresponding to the information of (4) together with an ID of a requested beam RS. Through this, the UE may report/request transmission of beam RS(s) within the angle range around the corresponding beam (e.g., beam RS(s) within an angle of $\pm$ X(/2) degrees from an angle of the reported beam).

As another example, the UE may configure information to be reported/requested using only the corresponding information (i.e., the information of (4)), and may report/request transmission of beam RS(s) within the angle range around a serving beam (e.g., beam RS(s) within an angle of $\pm$ X(/2) degrees from an angle of the serving beam).

As yet another example, the UE may configure the corresponding information (i.e., the information of (4)) as information on a required/preferred beam angle, and may report/request transmission of beam (RS(s)) corresponding to the beam angle. As an example, the information for the beam angle may be index information related to the beam angle. In this case, a base station may transmit beam RS(s) of the corresponding beam angle, or may transmit (neighboring) beam RS(s) having beam angles similar to the corresponding beam angle.

As yet another example, the UE may report, to a base station, information on a required/preferred beam angle together with an angle range value (e.g., X degrees). Through this, the UE may report/request transmission of beam RS(s) within the angle range around the corresponding beam (e.g., beam RS(s) within an angle of $\pm$ X(/2) degrees from an angle of the reported beam).

(5) Information for validity of beam-related information reported/requested by a UE and/or differentiated information based thereon

Beam-related information reported/requested by a UE to a base station may be valid only for a certain period of time, or beam information reported/requested may be configured differently according to time (interval). For example, the beam-related information may include information for a beam RS (set), information on a repetition number of a beam RS (set), information for a beam angle, and the like (e.g., information such as (1) to (4) described above).

The corresponding information (i.e., the information of (5)) may include a value/information indicating for time duration where the beam-related information reported/requested by the UE (e.g., information such as (1) to (4) described above) is valid and/or a value/information for different beam-related information (e.g., information such as (1) to (4) described above) according to different time (ranges/intervals). As an example, the related time (ranges/intervals) may be based on units such as symbols, slots, frames, or milliseconds (msec).

For example, when the corresponding information (i.e., the information of (5)) is configured as value(s)/information on different beam-related information according to different time (ranges/intervals) (i.e., differentiated information), the value(s)/information may be configured independently for each time interval. Alternatively, in this case, the value(s)/information may be configured as information on difference values with reference to information for a specific reference time interval (e.g., a first time interval). As an example, the information on difference values may include information on a difference in beam angle (range), a difference in a number of beams, a repetition number of beams required as time elapses, an increase amount/ratio of a beam angle range and/or a number of beams, and the like.

Additionally or alternatively, when the corresponding information (i.e., the information of (5)) is configured as value(s)/information on different beam-related information according to different time (ranges/intervals) (i.e., differentiated information), the UE may select/determine/report a time interval, or may be configured/defined to configure reporting values based on time intervals configured by a base station or predefined time intervals (e.g., time intervals defined every X ms).

In this regard, when a UE reports/requests beam repetition transmission to a base station (or a network) for UE Rx beam refinement, the UE may report/request that two repetitions are required when a time interval is smaller than X ms, and may report/request that four repetitions are required when a time interval is greater than or equal to X ms. That is, as time elapses, beams may become more mismatched, and thus a number of beams required for reception beam refinement may increase.

Additionally or alternatively, the UE may report/request, to the base station, time information (e.g., X ms, Y slots) indicating until when beam RS (set(s)) and/or beam angle(s) reported/requested by the UE are valid.

Additionally or alternatively, the UE may report/request, to the base station, information on time-varying characteristics of validity/reliability of beam RS (set(s)) and/or beam angle information reported/requested by the UE (e.g., an increase/decrease rate of reliability).

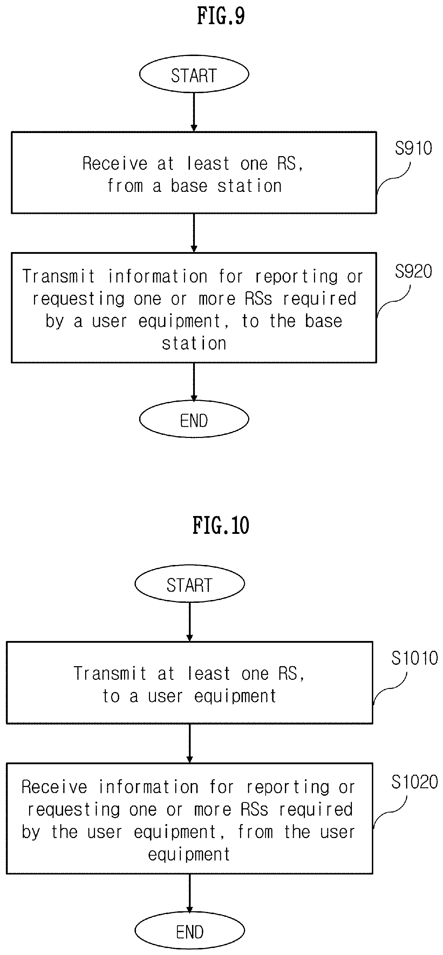

FIGS. 9 and 10 exemplify a UE operation and a base station operation in a process in which the UE transmits, to the base station, reporting/requesting related to beam management based on the information configuration described above in the present disclosure.

FIG. 9 is a diagram for explaining an operation of a user equipment (UE) in a wireless communication system to which the present disclosure may be applied.

Referring to FIG. 9, the UE may receive at least one RS from the base station (S910).

In this regard, for beam management, the UE may need transmission of RS(s) by the base station. In this case, the UE may request, to the base station, transmission of certain RS(s) by considering RS(s) previously received from the base station.

That is, a UE that has received the at least one RS may, based thereon, transmit, to the base station, information for reporting/requesting one or more RSs required by the UE (S920).

For example, for beam management, the UE may transmit, to the base station, information for reporting/requesting one or more RSs to the base station. The information may be transmitted through at least one of a radio resource control (RRC) message, a medium access control-control element (MAC-CE), downlink control information (DCI), or UE capability information.

Additionally, the beam management may be based on an artificial intelligence (AI) model or a machine learning (ML) model at at least one of the UE or the base station. In this case, when the beam management is based on an AI model or an ML model at the UE, data related to one or more RSs reported/requested by the UE may be used for training or inference of the AI model or the ML model at the UE.

In this regard, the information may include, for the one or more RSs, at least one of first information indicating an RS or an RS set, second information related to a repetition number, third information related to a number of RSs, or fourth information related to a beam angle. For example, the first information may correspond to the information of (1) described above in the present disclosure, the second information may correspond to the information of (2) described above in the present disclosure, the third information may correspond to the information of (3) described above in the present disclosure, and the fourth information may correspond to the information of (4) described above in the present disclosure.

As a specific example, the first information may be configured based on a bitmap for indicating one or more RSs reported/requested by a UE, and each bit of the bitmap may be mapped to an RS or an RS set configured by a base station. Additionally or alternatively, the first information may be configured with a first field and a second field having a size determined by the first field. In this case, the first field may indicate a number of RSs or RS sets to be reported or requested, and the second field may be defined to indicate identification information of RSs or RS sets to be reported or requested. In addition, when a plurality of RS sets are configured by a base station, the above-described first information may be configured as identification information for at least one of the configured plurality of RS sets, that is, information indicating specific RS set(s) among the configured RS sets.

Additionally, the second information may include information indicating a (single) repetition number that is commonly applied to the one or more RSs reported/requested by the UE. Alternatively, the second information may include information indicating an individual repetition number for each RS or RS set to be reported or requested.

In addition, the second information may include information for M preconfigured repetition number values, and the repetition number values may be mapped based on a number of RSs or RS sets for the one or more RSs. Here, the number of repetition number values included in the information (i.e., M) may be configured/indicated by a base station or the like. In this regard, when the one or more RSs reported/requested by the UE are composed of N RSs or N RS sets and the M value is configured to be smaller than the N value, at least one of the M repetition number values may be mapped to a plurality of RSs or a plurality of RS sets (e.g., a many-to-one mapping relationship). In addition, when the one or more RSs reported/requested by the UE are composed of N RSs or N RS sets and the M value is configured to be greater than the N value, N repetition number values among the M repetition number values may be sequentially mapped to the N RSs or the N RS sets, and remaining repetition number values may be set to predefined specific values.

In relation to configuration of information reported/requested by a UE to a base station as described above, when the first information and the third information are included together in the information, the third information may indicate, for each RS or each RS set indicated by the first information, a number of RSs or RS sets additionally reported or requested.

Additionally or alternatively, in relation to configuration of the information reported/requested by the UE to the base station as described above, the information may further include fifth information (e.g., the information of (5) described above in the present disclosure) for a time interval wherein at least one of the first information, the second information, the third information, or the fourth information included therein is valid.

Additionally or alternatively, in relation to configuration of the information reported/requested by the UE to the base station as described above, at least one of the first information, the second information, the third information, or the fourth information included in the information may be set to indicate different values for each specific time interval unit. In this regard, at least one of the first information, the second information, the third information, or the fourth information included in the information may be configured as information for a reference time interval and offset information on difference values for remaining time intervals.

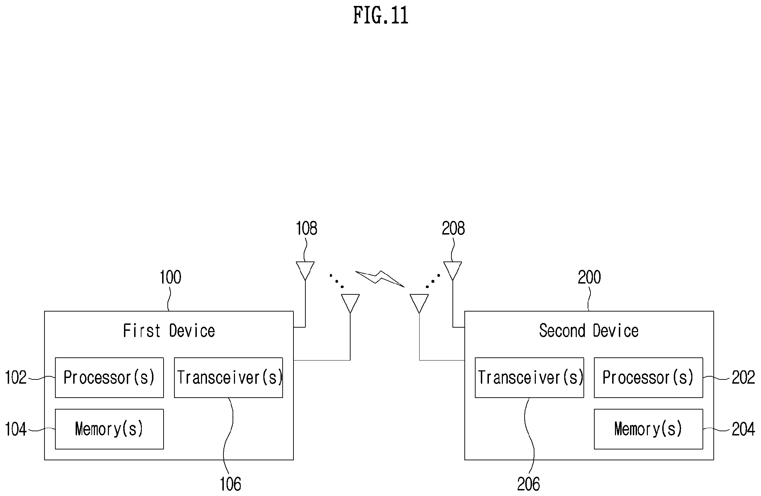

The method described in the example of FIG. 9 may be performed by a first device (100) of FIG. 11. That is, the UE of FIG. 11 may be implemented as the first device (100). For example, one or more processors (102) of the first device (100) of FIG. 11 may be configured to receive, from a base station, at least one reference signal (RS) through one or more transceivers (106), and to transmit, to the base station, information for reporting or requesting one or more RSs required by the UE in relation to beam management.

Furthermore, one or more memories (104) of the first device (100) may store instructions for performing the method described in the example of FIG. 9 or examples described later when executed by the one or more processors (102).

FIG. 10 is a diagram for explaining an operation of a base station in a wireless communication system to which the present disclosure may be applied.

Referring to FIG. 10, the base station may transmit at least one RS to a UE (S1010).

In this regard, for beam management, the UE may need transmission of RS(s) by the base station. In this case, the UE may request, to the base station, transmission of certain RS(s) by considering RS(s) previously received from the base station.

That is, the base station may receive, from the UE, information for reporting/requesting one or more RSs required by the UE (S1020).

In this case, the information may include, for the one or more RSs, at least one of first information indicating an RS or an RS set, second information related to a repetition number, third information related to a number of RSs, or fourth information related to a beam angle.

Detailed features related to detailed configurations of the first information, the second information, the third information, the fourth information, and/or the fifth information constituting information reported/requested by a UE, signaling related to transmission and reception of the information, beam management types to which the proposed operations of the present disclosure are applicable, and the like are the same as those described with reference to FIG. 9, and thus redundant descriptions are omitted.

The method described in the example of FIG. 10 may be performed by a second device (200) of FIG. 11. That is, the base station of FIG. 10 may be implemented as the second device (200). For example, one or more processors (202) of the second device (200) of FIG. 11 may be configured to transmit, to a UE, at least one reference signal (RS) through one or more transceivers (206), and to receive, from the UE, information for reporting or requesting one or more RSs required by the UE in relation to beam management.

Furthermore, one or more memories (204) of the second device (200) may store instructions for performing the method described in the example of FIG. 10 or examples described later when executed by the one or more processors (202).

Although the proposed method of the present disclosure has been described as a method for configuring information for beam reporting/requesting by a UE, this is merely a representative example, and the proposed method of the present disclosure may be extended and applied to a method for configuring information for CSI reporting/requesting, RRM/mobility-related reporting/requesting, and the like, in addition to beam reporting/requesting.

General Device to which the Present Disclosure may be applied

FIG. 11 illustrates a block diagram of a wireless communication device according to an embodiment of the present disclosure.

In reference to FIG. 11, a first wireless device 100 and a second wireless device 200 may transmit and receive a wireless signal through a variety of radio access technologies (e.g., LTE, LTE-A, LTE-A pro, NR, 5G, 5G-A, 6G).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, the processor 102 may process the information in the memory 104 to generate first information/-signal and then transmit a wireless signal including the first information/signal through the transceiver 106. Additionally, the processor 102 may receive a wireless signal including the second information/signal through the transceiver 106 and then store information obtained from signal processing of the second information/signal in the memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a user equipment (UE) in a wireless communication system, the method comprising:

   receiving, from a base station, at least one reference signal (RS); and
   based on the at least one RS, transmitting, to the base station, information for reporting or requesting one or more RSs required by the UE,
   wherein for the one or more RSs, the information includes at least one of first information indicating an RS or an RS set, second information related to a repetition number, third information related to a number of RSs, or fourth information related to a beam angle.

2. The method of claim 1, wherein:

   the first information is configured based on a bitmap for indicating the one or more RSs, and
   each bit of the bitmap is mapped to an RS or an RS set configured by the base station.

3. The method of claim 1, wherein:

   the first information includes a first field and a second field having a size determined by the first field, and
   the first field indicates a number of RSs or RS sets to be reported or requested, and the second field indicates identification information of RSs or RS sets to be reported or requested.

4. The method of claim 1, wherein:
based on a plurality of RS sets being configured by the base station, the first information is configured with identification information for at least one of the plurality of RS sets.

5. The method of claim 1, wherein:
the second information includes information indicating a repetition number that is commonly applied to the one or more RSs.

6. The method of claim 1, wherein:
the second information includes information indicating an individual repetition number for each RS or RS set to be reported or requested.

7. The method of claim 1, wherein:

the second information includes information for M preconfigured repetition number values, and
repetition number values are mapped based on a number of RSs or RS sets for the one or more RSs.

8. The method of claim 7, wherein:
based on the one or more RSs being configured with N RSs or N RS sets and the M value being configured to be smaller than the N value, at least one of the M repetition number values is mapped to a plurality of RSs or a plurality of RS sets.

9. The method of claim 7, wherein:

based on the one or more RSs being configured with N RSs or N RS sets and the M value being configured to be greater than the N value,
N repetition number values among the M repetition number values are sequentially mapped to the N RSs or the N RS sets, and remaining repetition number values are set to predefined specific values.

10. The method of claim 1, wherein:
based on the first information and the third information being included along with in the information, the third information indicates, for each RS or each RS set indicated by the first information, a number of RSs or RS sets additionally reported or requested.

11. The method of claim 1, wherein:
the information further includes fifth information for a time interval where at least one of the first information, the second information, the third information, or the fourth information included in the information is valid.

12. The method of claim 1, wherein:
at least one of the first information, the second information, the third information, or the fourth information included in the information is set to indicate different values for each specific time interval unit.

13. The method of claim 12, wherein:
at least one of the first information, the second information, the third information, or the fourth information included in the information is configured with information for a reference time interval and offset information for difference values in remaining time intervals.

14. The method of claim 1, wherein:
the information is transmitted through at least one of a radio resource control (RRC) message, a medium access control-control element (MAC-CE), downlink control information (DCI), or UE capability information.

15. The method of claim 1, wherein:

the one or more RSs are related to beam management, and
the beam management is based on an artificial intelligence (AI) model or a machine learning (ML) model at at least one of the UE or the base station.

**16.** The method of claim 15, wherein:
based on the beam management being based on the AI model or the ML model at the UE, data related to the one or more RSs is used for training or inference of the AI model or the ML model at the UE.

**17.** A user equipment (UE) in a wireless communication system, the UE comprising:

at least one transceiver; and
at least one processor coupled to the at least one transceiver;
wherein the at least one processor is configured to:

receive, from a base station, at least one reference signal (RS); and
based on the at least one RS, transmit, to the base station, information for reporting or requesting one or more RSs required by the UE,

wherein for the one or more RSs, the information includes at least one of first information indicating an RS or an RS set, second information related to a repetition number, third information related to a number of RSs, or fourth information related to a beam angle.

**18.** A method performed by a base station in a wireless communication system, the method comprising:

transmitting, to a user equipment (UE), at least one reference signal (RS); and
receiving, from the UE, based on the at least one RS, information for reporting or requesting one or more RSs required by the UE,
wherein for the one or more RSs, the information includes at least one of first information indicating an RS or an RS set, second information related to a repetition number, third information related to a number of RSs, or fourth information related to a beam angle.

**19.** A user equipment (UE) in a wireless communication system, the UE comprising:

at least one transceiver; and
at least one processor coupled to the at least one transceiver;
wherein the at least one processor is configured to:

transmit, to a user equipment (UE), at least one reference signal (RS); and
receive, from the UE, based on the at least one RS, information for reporting or requesting one or more RSs required by the UE,

wherein for the one or more RSs, the information includes at least one of first information indicating an RS or an RS set, second information related to a repetition number, third information related to a number of RSs, or fourth information related to a beam angle.

**20.** A processing device configured to control a user equipment (UE) in a wireless communication system, the processing device comprising:

at least one processor; and
at least one computer memory operatively coupled to the at least one processor and storing instructions for performing operations upon being executed by the at least one processor,
wherein the operations comprise:

receiving, from a base station, at least one reference signal (RS); and
based on the at least one RS, transmitting, to the base station, information for reporting or requesting one or more RSs required by the UE,

wherein for the one or more RSs, the information includes at least one of first information indicating an RS or an RS set, second information related to a repetition number, third information related to a number of RSs, or fourth information related to a beam angle.

**21.** At least one non-transitory computer readable medium storing at least one instruction, wherein:

the at least one instruction executed by at least one processor controls a device to perform uplink transmission in a wireless communication system to perform:

receiving, from a base station, at least one reference signal (RS); and
based on the at least one RS, transmitting, to the base station, information for reporting or requesting one or more RSs required by the UE,
wherein for the one or more RSs, the information includes at least one of first information indicating an RS or an RS set, second information related to a repetition number, third information related to a number of RSs, or fourth information related to a beam angle.

# FIG.1

# FIG.2

FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG.4

# FIG.5

# FIG.6

UE (110)                                                    BS (110)

Synchronization (101)

Obtain System Information (103)

Random Access (105)

Control Information Signaling (107)

Transmit/Receive Data (109)

FIG.7

# FIG.8

FIRST NODE                    SECOND NODE

1. FIRST SIGNALING

2. PERFORMING OPERATIONS BASED ON AI/ML MODEL

3. SECOND SIGNALING

## FIG.9

START

Receive at least one RS,
from a base station — S910

Transmit information for reporting or
requesting one or more RSs required
by a user equipment, to the base
station — S920

END

## FIG.10

START

Transmit at least one RS,
to a user equipment — S1010

Receive information for reporting or
requesting one or more RSs required
by the user equipment, from the user
equipment — S1020

END

FIG.11

## INTERNATIONAL SEARCH REPORT

| International application No. |
|---|
| **PCT/KR2024/010785** |

| **A. CLASSIFICATION OF SUBJECT MATTER** |
|---|
| **H04B 7/06**(2006.01)i; **H04B 7/08**(2006.01)i; **H04W 24/08**(2009.01)i; **H04W 24/10**(2009.01)i; **H04W 72/23**(2023.01)i; **H04L 1/1812**(2023.01)i; **H04L 5/00**(2006.01)i |
| According to International Patent Classification (IPC) or to both national classification and IPC |

| **B. FIELDS SEARCHED** |
|---|
| Minimum documentation searched (classification system followed by classification symbols) |
| H04B 7/06(2006.01); H04B 17/318(2015.01); H04B 7/024(2017.01); H04B 7/0456(2017.01); H04B 7/08(2006.01); H04L 5/00(2006.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: 참조 신호(reference signal), 요구(requirement), 요청(request), 반복 횟수(repetition number), RS 개수(number of RS), 빔 각도(beam angle) |

| **C. DOCUMENTS CONSIDERED TO BE RELEVANT** | | |
|---|---|---|
| Category* | Citation of document, with indication, where appropriate, of the relevant passages | Relevant to claim No. |
| Y | WO 2023-092396 A1 (HUAWEI TECHNOLOGIES CO., LTD.) 01 June 2023 (2023-06-01)<br>See paragraphs [0054], [0095], [0128] and [0130]-[0131]; and figure 5. | 1-21 |
| Y | US 2021-0028852 A1 (LG ELECTRONICS INC.) 28 January 2021 (2021-01-28)<br>See paragraphs [0251], [0255], [0289] and [0291]-[0292]; and table 30. | 1-21 |
| Y | KR 10-2022-0126293 A (LG ELECTRONICS INC.) 15 September 2022 (2022-09-15)<br>See paragraphs [0422] and [0424]. | 2-3 |
| A | US 2023-0155651 A1 (QUALCOMM INCORPORATED) 18 May 2023 (2023-05-18)<br>See paragraphs [0108]-[0196]; and figures 4-7. | 1-21 |
| A | US 2022-0393732 A1 (APPLE INC.) 08 December 2022 (2022-12-08)<br>See paragraphs [0052]-[0151]; and figures 2-11. | 1-21 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 November 2024** | **08 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/010785**

| Patent document cited in search report | | | Publication date (day/month/year) | Patent family member(s) | | | Publication date (day/month/year) |
|---|---|---|---|---|---|---|---|
| WO | 2023-092396 | A1 | 01 June 2023 | CN | 118318481 | A | 09 July 2024 |
| US | 2021-0028852 | A1 | 28 January 2021 | US | 11177869 | B2 | 16 November 2021 |
| | | | | WO | 2019-194490 | A1 | 10 October 2019 |
| KR | 10-2022-0126293 | A | 15 September 2022 | EP | 4106219 | A1 | 21 December 2022 |
| | | | | KR | 10-2562609 | B1 | 02 August 2023 |
| | | | | US | 11888566 | B2 | 30 January 2024 |
| | | | | US | 12063088 | B2 | 13 August 2024 |
| | | | | US | 2023-0208490 | A1 | 29 June 2023 |
| | | | | US | 2024-0039598 | A1 | 01 February 2024 |
| | | | | WO | 2021-162524 | A1 | 19 August 2021 |
| US | 2023-0155651 | A1 | 18 May 2023 | WO | 2023-091843 | A1 | 25 May 2023 |
| US | 2022-0393732 | A1 | 08 December 2022 | US | 10868596 | B2 | 15 December 2020 |
| | | | | US | 11342974 | B2 | 24 May 2022 |
| | | | | US | 11689261 | B2 | 27 June 2023 |
| | | | | US | 2019-0081672 | A1 | 14 March 2019 |
| | | | | US | 2021-0328636 | A1 | 21 October 2021 |
| | | | | WO | 2017-173567 | A1 | 12 October 2017 |

Form PCT/ISA/210 (patent family annex) (July 2022)